# EUROPÄISCHE PATENTSCHRIFT

(11) **EP 2 401 484 B1**
(45) Veröffentlichungstag und Bekanntmachung des Hinweises auf die Patenterteilung: **08.07.2015**
(21) Anmeldenummer: 10712312.7
(22) Anmeldetag: 26.02.2010
(51) Int. Cl.: F01N 3/04, F01N 3/037, F02M 25/07, B01D 47/02, B01D 47/06, B01D 47/10, B01D 53/78, B01D 53/77, B01D 53/92

(54) **VERFAHREN UND VORRICHTUNG ZUR REINIGUNG VON MOTORABGAS**
METHOD AND DEVICE FOR CLEANING OF ENGINE EXHAUST GAS
PROCÉDÉ ET DISPOSITIF D'ÉPURATION DE GAZ D'ÉCHAPPEMENT DE MOTEUR

(30) Priorität: 27.02.2009 DE 102009010808
(43) Veröffentlichungstag der Anmeldung: 04.01.2012
(73) Patentinhaber: MAN DIESEL & TURBO, FILIAL AF MAN DIESEL & TURBO SE, TYSKLAND, 2450 København SV (DK)
(72) Erfinder: KALTOFT, Johan, DK-2791 Dragør (DK); JENSEN, Carsten, Lund, DK-3400 Hillerød (DK); SØRENSEN, Martin, Lambert, DK-4200 Slagelse (DK); HØEGH, Martin, Myssen, DK-2300 Kobenhavn S (DK); SKJOLDAGER, Peter, DK-2920 Charlottenlund (DK)
(74) Vertreter: Munk, Ludwig Hubert
(86) Internationale Anmeldenummer: PCT/EP2010/001194
(87) Internationale Veröffentlichungsnummer: WO 2010/097227

(56) Entgegenhaltungen:
- WO-A1-2007/057573
- DE-A1- 2 218 621
- US-A- 3 798 880
- US-A- 4 643 742
- US-B1- 6 485 548

## Beschreibung

Die Erfindung betrifft ein Verfahren und eine Vorrichtung zur Reinigung von Motorabgas, insbesondere bei einem Großmotor, vorzugsweise Zweitakt-Großdieselmotor.

Aus der EP 1 230 969 A1 sind ein Verfahren und eine Vorrichtung zur Reinigung von Abgas bei einem Fahrzeugmotor bekannt. Dabei wird das zu reinigende Abgas mittels eines gelochten Rohrs ohne Vorbehandlung in ein Ölbad eingeleitet, oberhalb dessen eine perforierte Abdeckung als Spritzschutz angeordnet ist. Hierbei ergibt sich eine vergleichsweise eine geringe Kontaktzeit des Abgases mit der hier durch Öl gebildeten Reinigungsflüssigkeit, was sich ungünstig auf die Übernahme von im Abgas enthaltenen Verunreinigungen durch die Reinigungsflüssigkeit auswirken kann. Zu dem ergeben Sie hierbei im Ölbad vergleichsweise große Gasblasen, die nur an Ihrer Oberfläche mit der Reinigungsflüssigkeit in Kontakt kommen, aber ein vergleichsweise großes Gasvolumen einschließen, wodurch der oben genannte Nachteil noch verstärkt wird. Es ist daher nur ein vergleichsweise geringer Reinigungseffekt zu erreichen.

Aus der WO 2007/057573 A1 ist eine Reinigungseinrichtung zur Reinigung von Abgasen eines Dieselmotors bekannt, bei der der Abgasvolumenstrom für die Sprühbehandlung in Teilströme unterteilt ist. Die einzelnen mit Flüssigkeit beaufschlagten Abgas-Teilströme werden dann durch Rohre unter die Oberfläche eines Reinigungsbads geführt. Auch dieses Reinigungsbad ist nicht durch ein Stauelement unterteilt. Der in mehrere Ströme unterteilte Volumenstrom wird vor Erreichen des Reinigungsbads einer Sprühbehandlung unterzogen. Vor der Aufteilung in Teilströme erfolgt daher keine Sprühbehandlung.

Hiervon ausgehend ist es daher die Aufgabe der vorliegenden Erfindung, ein Verfahren oben genannter Art zu schaffen, das einen hohen Reinigungsgrad gewährleistet. Eine weitere Aufgabe der vorliegenden Erfindung ist es, eine Vorrichtung zur Durchführung des erfindungsgemäßen Verfahrens zu schaffen, die einfach aufgebaut ist und die Erzielung optimaler Verfahrensergebnisse ermöglicht.

Diese Aufgaben werden durch die Merkmale der unabhängigen Ansprüche 1 und 9 gelöst.

Die feinen Tröpfchen der in das Abgas eingebrachten Reinigungsflüssigkeit erfassen und binden die im Abgas enthaltenen, festen Partikel und die aus dem Abgas auswaschbaren Gase, wobei für diese Vorgänge in Folge einer vergleichsweise frühen zentralen Beaufschlagung des Abgases mit feinverteilter Reinigungsflüssigkeit vergleichsweise viel Zeit zur Verfügung steht, so dass die im Abgas enthaltenen Verunreinigungen zuverlässig von der Reinigungsflüssigkeit aufgenommen werden. Beim anschließenden Durchgang des aus Abgas und feinverteilter Reinigungsflüssigkeit bestehenden Aerosolstroms durch das Reinigungsflüssigkeitsbad wird der Flüssigkeitsanteil des eingeleiteten Aerosols bereits weitestgehend absorbiert, wobei die hiervon aufgenommenen Partikel und ausgewaschenen Gase an die Reinigungsflüssigkeit im Reinigungsflüssigkeitsbad übergehen und hiermit abgeführt werden. Das das Reinigungsflüssigkeitsbad aufnehmende Behältnis erhält permanenten Flüssigkeitsnachschub durch die in feiner Verteilung in das zu reinigende Gas eingebrachte Reinigungsflüssigkeit, so dass sich eine permanente Erneuerung des Inhalts des Behältnisses und eine zuverlässige Ableitung der hiervon aufgenommenen Verunreinigungen ergibt. Die erfindungsgemäßen Maßnahmen lassen daher insgesamt einen hohen Reinigungsgrad erwarten.

Vorteilhafte Ausgestaltungen und zweckmäßige Fortbildungen der übergeordneten Maßnahmen sind in den Unteransprüchen angegeben und aus der nachstehenden Beispielsbeschreibung an Hand der Zeichnung näher entnehmbar.

In der nachstehend beschriebenen Zeichnung zeigen:
- Figur 1: einen Längsschnitt durch eine erfindungsgemäße Abgas-Reinigungs vorrichtung,
- Figur 2: einen Querschnitt entlang der Linie II/II in Figur 1,
- Figur 3: einen Querschnitt durch eine zur Aufnahme eines Reinigungsflüssig keitsbads vorgesehene Wanne,
- Figur 4: die Anordnung gemäß Figur 3 im Betrieb,
- Figur 5: eine gegenüber der Horizontalen geneigte Wannenanordnung einer erfindungsgemäßen, z. B. auf einem Schiff installierten Reinigungs vorrichtung,
- Figur 6: eine schematische Darstellung eines Zweitakt-Großdieselmotors mit Abgasrezirkulation und -reinigung,
- Figur 7: eine schematische Darstellung eines Zweitakt-Großdieselmotors mit einer in die Auspuffleitung eingebauten Reinigungsvorrichtung,
- Figur 8: eine Variante zu Figur 1,
- Figur 9: ein Beispiel für eine einem Rohrstutzen zugeordnete Venturi-Anord - nung,
- Figur 10: eine Variante zu Figur 9 mit innerem Strömungskörper,
- Figur 11: eine Variante zu Figur 10,
- Figur 12: einen Vertikalschnitt durch das untere Ende eines Rohrstutzens mit zugeordnetem Ventilkörper und
- Figur 13: eine Draufsicht auf den Ventilkörper gemäß Figur 12.

Hauptanwendungsgebiet der vorliegenden Erfindung sind Großmotoren, insbesondere Zweitakt-Großdieselmotoren, wie sie beispielsweise als Antriebe für Schiffe oder für stationäre Kraftwerke oder dergleichen Verwendung finden können.

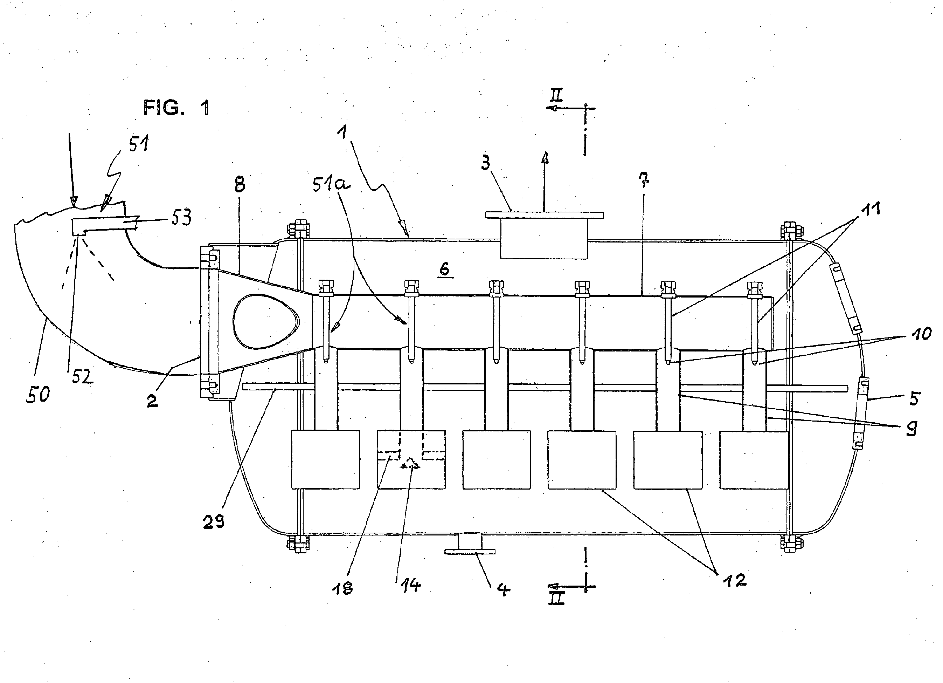

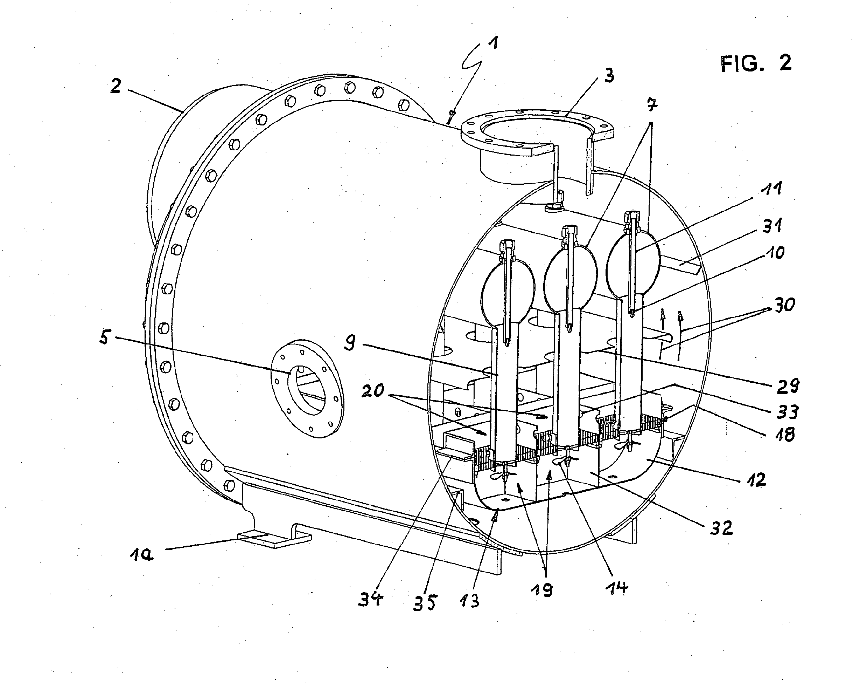

Die den Figuren 1 und 2 zugrunde liegende Abgasreinigungsvorrichtung enthält einen fassförmigen Behälter 1, der auf einem mit Standfüßen versehenen Traggestell 1 a aufgenommen ist. Der Behälter 1 besitzt einen stirnseitig angeordneten Abgaseingang 2 und einen hier nach oben abgehenden Abgasausgang 3 und ist an der Unterseite mit einem Wasserauslass 4 versehen. Der Abgaseingang 2 ist mit einer mit Abgas beaufschlagbaren Zuführleitung 50 verbunden.

Der fassförmige Behälter 1 besteht aus einem zylindrischen Mittelteil, das durch zwei stirnseitig angeflanschte Deckel verschlossen ist. Der Abgaseingang 2 ist hier im oberen Bereich eines stirnseitigen Deckels angeordnet. Der Abgasausgang 3 befindet sich hier etwa in der Mitte des Scheitelbereichs des zylindrischen Mittelteils. Zweckmäßig sind im Bereich des Mittelteils und/ oder der Deckel wenigstens ein, vorzugsweise mehrere Bullaugen 5 vorgesehen, über welche die Vorgänge im Inneren des Behälters 1 von außen beobachtet werden können.

Der Eigendruck des einen Motor bzw. dessen Abgasturbolader verlassenden Abgases soll im vorliegenden Beispiel ausreichen, um den Behälter 1 zu durchströmen. Dieser ist daher im vorliegenden Beispiel als Druckbehälter ausgebildet, der dem hohen Abgasdruck standhält. Zusätzliche Fördereinrichtungen für das Abgas werden hierbei nicht benötigt.

Im oberen Bereich des Innenraums 6 des Behälters 1 ist eine Anordnung mit wenigstens einem horizontalen Verteilerrohr 7 vorgesehen, das sich etwa über die Länge des Mittelteils des Behälters 1 erstreckt und mit dem Abgaseingang 2 kommuniziert. Im dargestellten Beispiel sind, wie am besten aus Figur 2 erkennbar ist, mehrere hier drei parallel nebeneinander angeordnete Verteilerrohre 7 vorgesehen, die über ein an den Abgaseinlass 2 angeschlossenes, mit einer entsprechenden Anzahl von Anschlussstutzen versehenes Verteilerstück 8 mit dem Abgaseingang 2 verbunden sind. Von jedem Verteilerrohr 7 gehen mehrere, über seine Länge verteilte, durch vertikale Rohrstutzen gebildete Abzweigstutzen 9 nach Unten ab, die jeweils einen Teilstrom des dem zugehörigen Verteilerrohr 7 zugeführten Abgas-Volumenstroms aufnehmen. Im dargestellten Beispiel sind, wie Figur 2 erkennen lässt, die von den drei Verteilerrohren 7 nach unten abgehenden Abzweigstutzen 9 jeweils in Form von quer zur Behälterachse sich erstreckenden Reihen angeordnet.

Bei der dargestellten Ausführung mit innerhalb des Behälters 1 stattfindender Aufteilung des Abgasstroms auf die Abzweigstutzen 9 können die Verteilerrohre 7 in vorteilhafter Weise als Heizelemente fungieren, die Wärme an ein vorbeistreifendes Medium, beispielsweise das dem Abgasauslass 3 zuströmende, gereinigte Abgas abgeben können. In vielen Fällen ist dies jedoch nicht erwünscht oder not-wendig. In derartigen Fällen kann die Aufspaltung des Abgasstroms auf die einzelnen Abzweigstutzen 9 auch außerhalb des Behälters 1 stattfinden. Die über das Verteilerstück 8 mit der Zuführleitung 50 verbundenen Verteilerrohre 7 können sich dabei außerhalb des Behälters 1 befinden. Die von den Verteilerrohren 7 abgehenden Abzweigstutzen 9 werden dabei durch eine Behälterwandung in den Innenraum 6 des Behälters 1 eingeführt.

Das den Abzweigstutzen 9 zugeführte Abgas wird mit einer feinverteilten Reinigungsflüssigkeit beaufschlagt. Dadurch entsteht praktisch eine Art Nebel oder Aerosol aus Abgas und feinverteilter Reinigungsflüssigkeit. Auf diese Weise wird eine große Oberfläche der Reinigungsflüssigkeit erzeugt, an der das Abgas mit der Reinigungsflüssigkeit in Kontakt kommt, was die erwünschte Reinigung des Abgases begünstigt. Die Beaufschlagung des Abgases mit feinverteilter Reinigungsflüssigkeit kann zentral beispielsweise im behälternahen Bereich der Zuführleitung 50, oder lokal, beispielsweise im Bereich der Verteilerrohre 7 und/ oder vorzugsweise im Bereich der Abzweigstutzen 9 erfolgen. Zur zentralen Beaufschlagung des Abgases mit feinverteilter Reinigungsflüssigkeit ist in Figur 1 eine der Zuführleitung 50 zugeordnete Einbringeinrichtung 51 vorgesehen, die hier eine oder mehrere Sprühdüsen 52 zum Einsprühen von Reinigungsflüssigkeit enthält.

Bei der Reinigungsflüssigkeit kann es sich zweckmäßig um Wasser, auch Salzwasser oder Brackwasser, mit oder ohne Zusatz von Chemikalien handeln. In jedem Fall ist die Reinigungsflüssigkeit so beschaffen, dass während des gesamten Reinigungsvorgangs nur wenig oder vorzugsweise gar kein Schaum entsteht.

Im dargestellten Beispiel sind zusätzlich zur zentralen Einbringeinrichtung 51 auch lokale, den Abzweigstutzen 9 zugeordnete Einbringeinrichtungen 51 a vorgesehen, wobei ein Teil der Reinigungsflüssigkeit mittels der zentralen Einbringeinrichtung 51 und der Rest mittels der lokalen Einbringeinrichtungen 51 a eingebracht wird. Im dargestellten Beispiel sind den Abzweigstutzen 9 hierzu in ihrem oberen Bereich angeordnete Sprühdüsen 10 zugeordnete die mit Reinigungsflüssigkeit beaufschlagbar sind. Die Sprührichtung der Sprühdüsen 10 bzw. 52 stimmt mit der Strömungsrichtung des vorbeiströmenden Abgases überein, so dass sich praktisch eine Gleichstrombehandlung ergibt. Zur Bildung der Sprühdüsen 10 bzw. 52 können Druckzerstäuberdüsen vorgesehen sein, welche die zugeführte Reinigungsflüssigkeit in sehr feine, kleine Tröpfchen zerstäuben. Die Sprühdüsen 10 bzw. 52 können etwa zentral im jeweils zugeordneten Strömungskanal, d. h. in den Abzweigstutzen 9 bzw. der Zuführleitung 50 eingeordnet sein. Es wäre natürlich auch möglich, jeweils mehrere, über den Querschnitt verteilte Sprühdüsen vorzusehen.

Die in der Zuführleitung 50 angeordnete Sprühdüse 52 ist an einem in die Zuführleitung 50 hineinragenden Arm 53 angebracht, der zweckmäßig gleichzeitig als Versorgungsleitung zur Versorgung der zugeordneten Sprühdüse 52 mit vorgespannter Reinigungsflüssigkeit ausgebildet sein kann. Die in den Abzweigstutzen 9 angeordneten Sprühdüsen 10 sind jeweils am unteren Ende einer das zugeordnete Verteilerrohr 7 durchsetzenden, in den oberen Bereich des zugeordneten Abzweigstutzen 9 hineinragenden, hierzu koaxialen Lanze 11 angebracht. Die Lanzen 11 sind ebenfalls zweckmäßig als den Düsen 10 zugeordnete Versorgungsleitungen ausgebildet, die mit vorgespannter Reinigungsflüssigkeit beaufschlagbar sind.

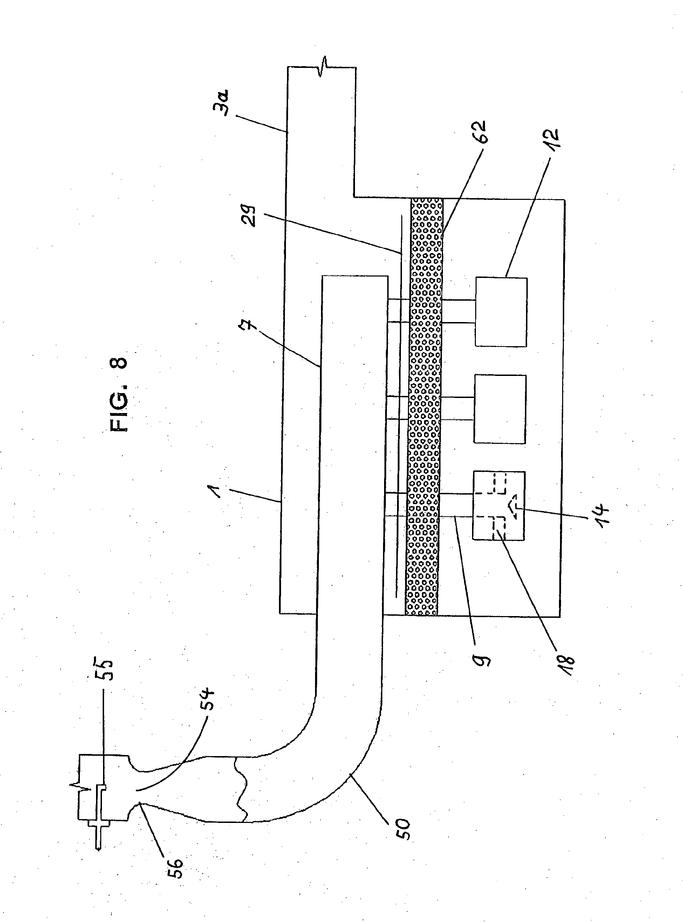

Zusätzlich oder alternativ zur Verwendung von Zerstäuberdüsen kann auch mit Hilfe einer Venturi-Anordnung eine feine Verteilung von Reinigungsflüssigkeit im Abgas erreicht werden. Hierzu kann das Zuführrohr 50, wie in Figur 8 dargestellt ist, mit einer die Abgasströmung beschleunigenden Strömungsdrossel 54 versehen sein, der eine darüber angeordnete Zuführeinrichtung 55 zum Zuführen von Reinigungsflüssigkeit zugeordnet ist. Diese Zuführeinrichtung 55 kann mit Düsen versehen oder düsenlos ausgebildet sein. Zur Bildung der Strömungsdrossel 54 ist die Zuführleitung 50 mit einer entsprechenden Wandeinziehung 56 versehen. In Folge der im Bereich der Strömungsdrossel 54 sich ergebenden Richtungsänderung und Beschleunigung des Abgases wird eine sehr gute Verteilung der zugeführten Reinigungsflüssigkeit erreicht.

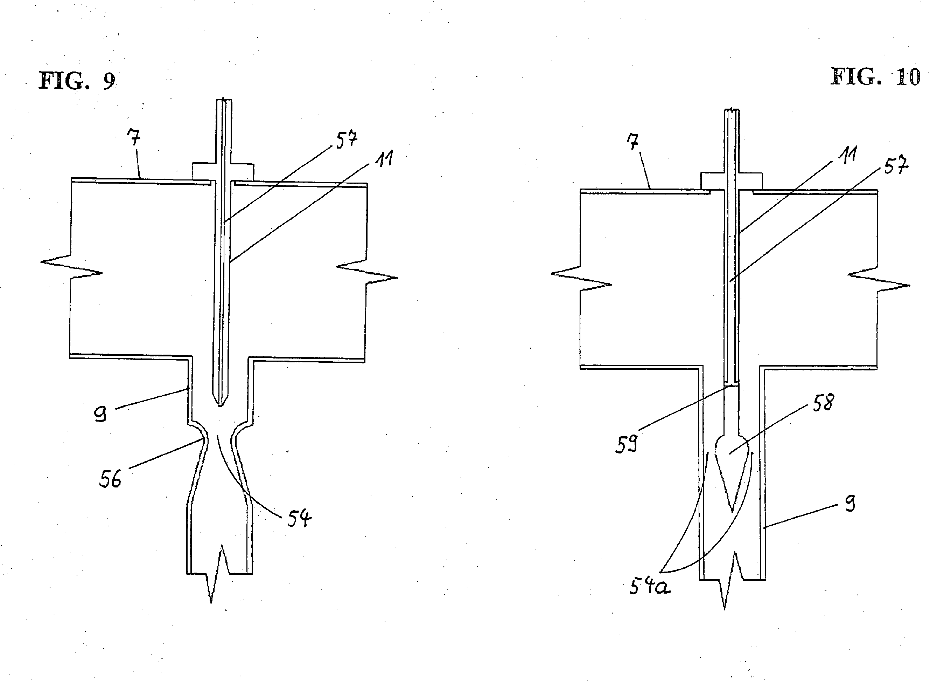

In ähnlicher Weise kann auch den die Abzweigstutzen 9 bildenden Rohrstutzen jeweils ein Venturi-Anordnung zugeordnet sein. Hierzu können die Abzweigstutzen 9 wie aus Figur 9 ersichtlich ist, ebenfalls mit einer Strömungsdrossel 54 versehen sein, der eine darüber angeordnete Zuführeinrichtung zum Zuführen von Reinigungsflüssigkeit zugeordnet ist. Zur Bildung der den Abzweigstutzen 9 zugeordneten Zuführeinrichtungen finden mit einem zentralen Versorgungskanal 57 versehen Lanzen 11 der im Zusammenhang mit der Figur 1 bereits erwähnten Art Verwendung. Die Lanzen 11 sind hier allerdings am unteren Ende nicht mit einer Düse 10 versehen. Vielmehr ist der Versorgungskanal 57 der Lanzen 11 unten offen. Bei dem der Figur 9 zugrunde liegenden Beispiel wird die Strömungsdrossel 54 ähnlich wie die bei der Ausführung gemäß Figur 8 durch eine Wandeinziehung 56 gebildet.

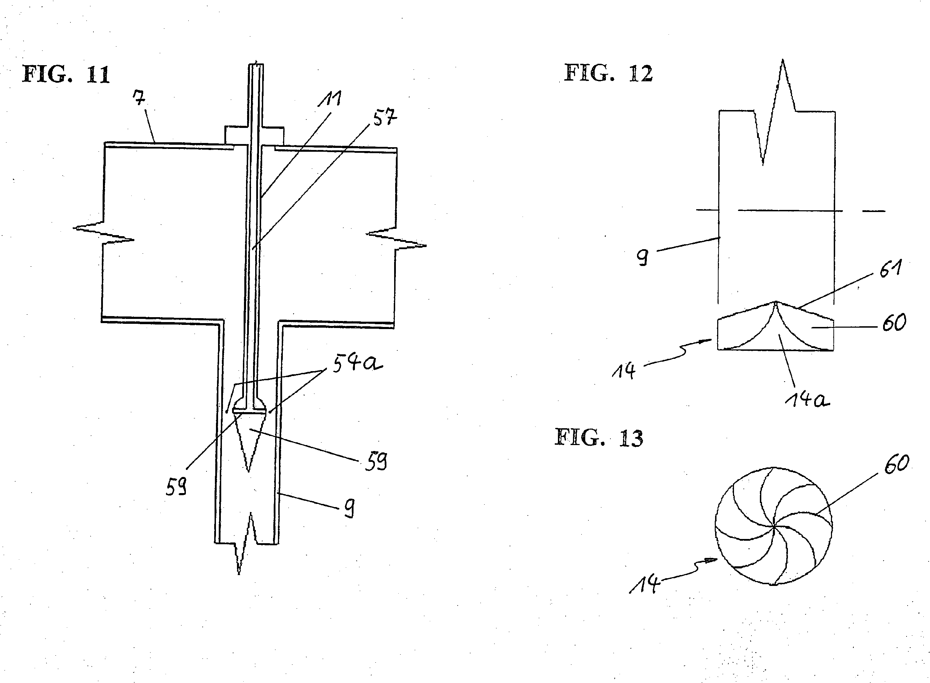

Eine alternative Ausführung zeigt Figur 10. Hierbei findet zur Bildung einer Strömungsdrossel 54a ein im Strömungskanal, hier im Abzweigstutzen 9 vorzugsweise zentral angeordneter Umströmungskörper 58 Verwendung. Dieser hat zweckmäßig die Form eines stromlinienförmig gestalteten, nach unten gerichteten Pfeils. Mit Hilfe des Umströmungskörpers 58 lässt sich ebenfalls eine Umlenkung und Beschleunigung des vorbeiströmenden Abgases erreichen. Der Umströmungskörper 58 kann zweckmäßig am unteren Ende einer in den zugeordneten Abzweigstutzen 9 hineinragenden Lanze 11 angebracht sein. Diese ist zweckmäßig mit dem Umströmungskörper 58 benachbarten, von ihrem zentralen Versorgungskanal 57 radial abgehenden Auslassbohrungen 59 versehen. Bei der Ausführung gemäß Figur 10 befinden sich die Auslassbohrungen 59 im Bereich des unteren Endes der Lanze 11. Selbstverständlich wäre es auch denkbar, die Auslassbohrungen 59 im Bereich des Umströmungskörpers 58 vorzusehen. Eine derartige Ausführung liegt der Figur 11 zugrunde. Der Versorgungskanal 57 erstreckt sich hierbei selbstverständlich bis zu den Auslassbohrungen 59 in den Umströmungskörper 58 hinein. Im Übrigen entspricht die Ausführung gemäß Figur 11 der Anordnung gemäß Figur 10.

Der Umströmungskörper 58 kann ein- oder mehrteilig ausgebildet sein. Der Umströmungskörper 58 kann auch einteilig mit der jeweils zugeordneten Lanze 51 ausgebildet oder an diese angesetzt sein. Die Oberfläche des Umströmungskörpers 58 kann zweckmäßig mit einer verschleißfesten Schutzschicht versehen sein.

Dabei kann es sich um eine aufgeschweißte oder aufgeschmolzene Schicht handeln. Die Schutzschicht kann vorteilhaft aus Glas bestehen, so dass sich ein besonders geringer Strömungswiderstand ergibt. Eine interne Venturi-Anordnung der den Figuren 10 und 11 zugrunde liegenden Art kann selbstverständlich auch zur Bildung einer zentralen Einbringeinrichtung 51 im Bereich der Zuführleitung 50 vorgesehen sein.

Unterhalb der Abzweigstutzen 9 ist wenigstens eine Wanne 12 platziert, in welche die Abzweigstutzen mit ihren unteren offenen Enden hineinragen, wie am besten aus Figur 2 ersichtlich ist. Jedem Abzweigstutzen 9 ist dabei zweckmäßig eine eigene Wanne 12 zugeordnet, wobei die den eine Reihe oben genannter Art bildenden, nebeneinander angeordneten Abzweigstutzen 9 zugeordneten Wannen 12, wie aus Figur 2 ersichtlich ist zu einer über die Breite des Innenraums 6 durchgehenden Kassette 13 verbunden sein können. Auch in Längsrichtung durchgehende Kassetten können vorgesehen sein.

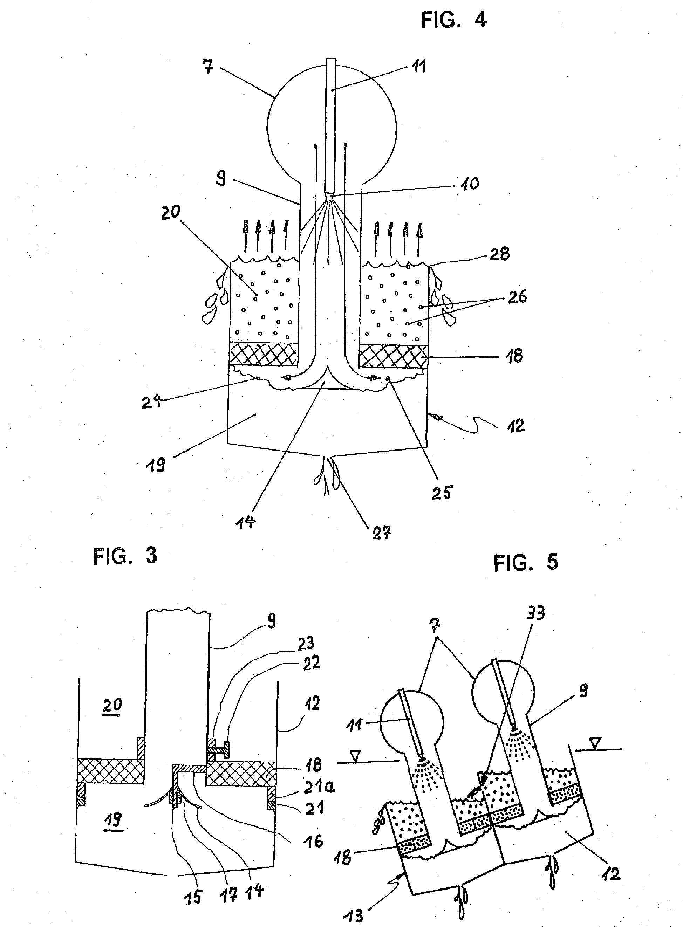

Dem offenen unteren Ende der Abzweigstutzen 9 ist jeweils ein Ventilkörper 14 zugeordnet, der zweckmäßig einstellbar ist. Hiermit lässt sich der lichte Abstand zwischen dem Ventilkörper 14 und dem unteren Ende des zugeordneten Abzweigstutzens 9 und damit der zur Verfügung stehende Strömungsquerschnitt einstellen. Die Einstellung erfolgt zweckmäßig so, dass der Abgas-Volumendurchsatz durch alle Abzweigstutzen 9 gleich ist. Der einstellbare Ventilkörper 14 ist, wie am besten aus Figur 3 erkennbar ist, auf einer zum zugeordneten Abzweigstutzen 9 koaxialen Stange 15 aufgenommen, die mit ihrem oberen Ende an wenigstens einer an der Innenwand des zugeordneten Abzweigstutzens 9 angebrachten Strebe 16 befestigt ist. Selbstverständlich können auch mehrere in der Höhe und/ oder umfangseitig gegeneinander versetzte Streben vorgesehen sein. Die Stange 15 kann als Gewindestange ausgebildet sein, auf die den zugeordneten Ventilkörper 14 fixierende Muttern 17 aufschraubbar sind, mittels derer eine Einstellung des Ventilkörpers 14 möglich ist.

Die dem offenen unteren Ende der Abzweigstutzen 9 zugeordneten Ventilkörper 14 bewirken eine radiale Strömungsumlenkung, d. h. der in Richtung der Achse der Abzweigstutzen 9 ankommende Volumenstrom wird radial nach allen Richtungen verteilt. Die Ventilkörper 14 besitzen, wie aus Figur 12 ersichtlich ist, einen konoiden Kern 14a, dessen Oberseite als von einer konkav nach unten gebogenen Erzeugenden gebildete Rotationsfläche ausgebildet ist. Hierdurch ergibt sich ein gebogener Übergang von der axialen, hier vertikal verlaufenden Richtung in die radiale, hier horizontale Richtung. Die Oberseite des Kerns 14a ist zweckmäßig mit mit radial verlaufenden Schaufeln 60 besetzt. Diese sind in Umfangsrichtung gleichmäßig voneinander beabstandet, so dass sich eine gleichmäßige Verteilung über den Umfang ergibt. Die Oberkante 61 der Schaufel 60 verläuft, wie Figur 12 weiter zeigt, von der Spitze des konoiden Kerns 14a ausgehend horizontal oder hier gegen leicht geneigt nach außen so dass die Höhe der Schaufeln 60 von radial innen nach radial außen zunimmt. Die Schaufeln 60 können, wie Figur 13 zeigt, über ihrer Länge gebogen sein. Auf diese Weise lässt sich eine besonders gute Verwirbelung des in die radiale Richtung umgelenkten Volumenstroms erreichen.

Die an den massebehafteten Tröpfchen, die bei der vom Ventilkörper 14 bewirkten Umlenkung in radialer Richtung beschleunigt werden, angreifenden, einer Richtungsänderung entgegenwirkenden Trägheitskräfte führen hierbei bereits zu einer Abscheidung von Tröpfchen aus dem umgelenkten Volumenstrom. Dies betrifft insbesondere die schwereren Tröpfchen. Die separierten Tröpfchen werden praktisch von der umgebenden Reinigungsflüssigkeit in der Wanne 12 absorbiert.

Die Wannen 12 sind jeweils durch einen von jedem zugeordneten Abzweigstutzen 9 durchgriffenen Zwischenboden 18 in ein unteres Abteil 19, in welches der zugeordnete Abzweigstutzen 9 mit seinem unteren, offenen Ende einmündet und in welchem der Ventilkörper 14 sich befindet, und ein oberes Abteil 20 unterteilt. Im Betrieb ist sowohl im unteren Abteil 19 als auch im oberen Abteil 20 Reinigungsflüssigkeit vorhanden. Jede Wanne 12 enthält dementsprechend ein durch den Zwischenboden 18 zweigeteiltes Reinigungsflüssigkeitsbad. Der Zwischenboden 18 ist als gas- und flüssigkeitsdurchlässiges, flächenhaftes Stauelement ausgebildet, das eine Vielzahl von über seine Fläche verteilten, engen Passagen zwischen dem unteren Abteil 19 und dem oberen Abteil 20 und dementsprechend zwischen dem unteren und oberen Teil des Reinigungsflüssigkeitsbads enthält. Hierzu kann das den Zwischenboden 18 bildende Stauelement als ein- oder mehrlagiges Gitter und/ oder Netzwerk eines engmaschigen Gitters oder Netzes, oder Drahtgewebes oder Streckmetalls oder als ähnliches durchlässiges Strukturelement bzw. Strukturelementpaketanordnung, z.B. aus Metall- und/ oder Kunststoffschaum ausgebildet sein. Der Zwischenboden 18 ist, wie Figur 3 weiter erkennen lässt, randseitig auf wannenfesten Tragleisten 21 abgestützt und mittels einer den zugeordneten Abzweigstutzen 9 umfassenden und durch Schrauben 22 hieran festlegbaren Büchse 23 von oben fixiert.

Zwischen dem Zwischenboden 18 und den Stützleisten 21 kann eine eine geeignete Höhe aufweisende Distanzelementanordnung 21 a, z.B. in Form von auf den Stützleisten 21 aufliegenden Leisten oder eines auf den Stützleisten 21 aufliegenden Rahmens etc. vorgesehen sein. Mit Hilfe der Distanzelementanordnung lässt sich die Position des Zwischenbodens 18 gegenüber dem unteren Ende des zugeordneten Abzweigstutzens 9 genau justieren.

Im Betrieb wird die erfindungsgemäße Vorrichtung mit Abgas, das mehr oder weniger druckbehaftet sein kann, beaufschlagt, das auf die Abzweigstutzen 9 verteilt wird und unter der Wirkung seines Eigendrucks alle Reinigungsstationen durchströmt. Gleichzeitig werden die Flüssigkeiteinbringeinrichtungen 51, 51a mit einer kaum oder vorzugsweise nicht schaumbildenden Reinigungsflüssigkeit, zweckmäßig in Form von Wasser beaufschlage, das durch Zerstäuberdüsen und/ oder Venturiwirkung fein zerstäubt wird, so dass sehr feine Tröpfchen gebildet werden und im behälternahen Endbereich der Zuführleitung 50 und in den Abzweigstutzen 9 ein Nebel bzw. Aerosol erzeugt wird. Durch diese Sprühbehandlungen werden in einem ersten Behandlungsschritt die im Abgas enthaltenen, festen Verunreinigungen, die Kondensationskeme bilden, von den Tröpfchen der Reinigungsflüssigkeit, hier den Wassertröpfchen, erfasst und von diesen mitgeführt. Ebenso werden die im Abgas enthaltenen, auswaschbaren Gase von den Wassertröpfchen ausgewaschen und von diesen mitgeführt.

Der aus den Abzweigstutzen 9 austretende Volumenstrom in Form des gebildeten Abgas-Wasser-Gemisches bzw. Aerosols wird zur weiteren Behandlung in das in der zugeordneten Wanne 12 enthaltene Reinigungsflüssigkeitsbad eingeleitet. Dabei ergibt sich wie aus den Strömungspfeilen der Figur 4 ersichtlich ist, durch den Ventilkörper 14 eine radiale Umlenkung von der vertikalen Richtung in die horizontale Richtung, wobei die im unteren Abteil 19 enthaltene Reinigungsflüssigkeit vom dem Zwischenboden 18 benachbarten Bereich verdrängt wird, wie in Figur 4 durch eine unregelmäßige Oberfläche 24 angedeutet ist. Gleichzeitig dringt ein größerer Teil der Wassertröpfchen in die im unteren Abteil 19 enthaltene Reinigungsflüssigkeit ein und wird von dieser absorbiert. Das Abgas mit dem Rest an Wassertröpfchen steht in Form eines Kissens 25 an der Unterseite des durch den Zwischenboden 18 gebildeten Stauelements an und gelangt über die feinen Passagen des Stauelements in das obere Abteil 20, wobei die noch durchkommenden Wassertröpfchen von der dort vorhandenen Reinigungsflüssigkeit absorbiert werden und das Abgas in Form feiner Bläschen bzw. Perlen 26 nach oben sprudelt, wobei im Abgas noch enthaltene restliche Verunreinigungen von der Reinigungsflüssigkeit erfasst werden und in diese übergehen.

Zur Füllung der Wannen 12 mit Reinigungsflüssigkeit ist den Wannen 12 zweckmäßig eine hier nicht näher dargestellte Versorgungseinrichtung zu geordnet. Im Betrieb erhält die Flüssigkeitsfüllung der Wannen 12 in Form der im Abgas fein verteilten Reinigungsflüssigkeit ständigen Nachschub, was zu einer permanenten Erneuerung der Reinigungsflüssigkeit in den Wannen 12 führt. Die Wannen 12 sind dementsprechend mit einer bodenseitigen Ablauföffnung 27 versehen, die zweckmäßig am tiefsten Punkt des geneigten Wannenbodens angeordnet ist. Die Ablauföffnung 27 ist so dimensioniert, dass über diese weniger Reinigungsflüssigkeit ablaufen kann als Nachschub kommt. Der Überschuss läuft über die oberen Kanten der Wannen 12 ab, die dementsprechend Überlaufkanten 28 bilden, wie aus Figur 4 ersichtlich ist. Die aus den Wannen 12 nach unten abfließende bzw. über die Überlaufkanten 28 überlaufende Reinigungsflüssigkeit wird im unteren Bereich des Innenraums 6 des Druckbehälters 1 gesammelt und strömt über den nach unten abgehenden Auslass 4 ab.

Das das obere Abteil 20 durchsprudelnde und aus diesem aufsteigende Abgas kann noch Teilchen in Form von Verunreinigungen, Wassertröpfen und dergleichen mitführen. Um diese Teilchen weitestgehend zu entfernen erfolgt oberhalb der Wannen 12 eine weitere ein- oder mehrstufige Abscheidung. Bei dem in Figur 1 gezeichneten Beispiel ist diese Abscheidung einstufig. Hierzu ist hier oberhalb der Wannen 12 ein von den Abzweigstutzen 9 mit Bewegungsfreiheitsgrad durchsetztes Abweisschild 29 vorgesehen, dessen Seitenkanten mit den benachbarten Seitenwänden des Druckbehälters 1 spaltförmige, seitliche Strömungspassagen 30 bilden. Das aus den Wannen 12 aufsteigende Abgas wird dementsprechend entlang der Unterseite des Abweisschilds 29 etwa horizontal nach radial außen geführt und dort umgelenkt, wodurch sich eine Abscheidung massebehafteter Teilchen durch Fliehkraftwirkung ergibt. Zur Verstärkung der Umlenkung können die seitlichen Flanken des Abweisschilds 29, wie aus Figur 2 ersichtlich ist, nach unten gebogen sein. Das Abweisschild 29 befindet sich zweckmäßig auf der mittleren Höhe des fassförmigen Druckbehälters 1, wo die größte lichte Weite vorhanden ist, so dass das Abgas im Anschluss an die genannten seitlichen Strömungspassagen 30 durch die Wand des Druckbehälters 1 wieder nach innen geführt wird, was den Umlenkeffekt noch verstärkt. Aufgrund der Umlenkung werden vom Abgas mitgeführte Wassertröpfchen nach radial außen geschleudert und laufen entlang der Wandung des Druckbehälters 1 nach unten ab. Um sicherzustellen, dass keine Wassertröpfchen bis zum Abgasausgang 3 mitgerissen werden können, sind oberhalb der Strömungspassagen 30 von der Wandinnenseite des Druckkessels 1 nach innen vorspringende Tropfenfangleisten 31 vorgesehen. Diese sind zweckmäßig nach unten geneigt.

Bei dem in Figur 8 gezeichneten Beispiel ist eine zweistufige Abscheidung oberhalb der Wannen 12 angedeutet. Hierzu ist dem Abweisschild 29 ein aus einem für Abgas durchlässigen Material bestehendes Separierelement 62 vorgeordnet. Das Separierelement 62 kann, wie im dargestellten Beispiel plattenförmig ausgebildet sein und ist zweckmäßig spaltfrei im Behälter 1 angeordnet. Zur Bildung des Separierelements 62 kann poröses und/ oder vernetztes Material Verwendung finden, das unregelmäßige Durchgangspfade für das es durchsetztende Medium aufweist, so dass eine hohe Wahrscheinlichkeit besteht, dass massebehaftete Teilchen an Kanten etc. anstoßen und dadurch gefangen werden.

Denkbar wäre natürlich auch, oberhalb der Wannen 12 eine einstufige Abscheidung nur unter Verwendung eines Separierelements 62 vorzusehen. In diesem Fall könnte das oberhalb des Separierelements 62 vorgesehene Abweisschild 29 entfallen. Es wäre aber auch denkbar. Mehrere Separierelemente 62 hintereinander anzuordnen, wobei wenigstens eines als Abweisschild ausgebildet sein könnte.

Das die Strömungspassagen 30 passierende Abgas strömt wandnah an den Verteilerrohren 7 vorbei zum Abgasauslass 3, der in Figur 1 im Scheitelbereich des Druckbehälters 1 vorgesehen ist. Der Abgasauslass kann aber auch stirnseitig erfolgen, wie in Figur 8 bei 3a angedeutet ist. Die Verteilerrohre 7, die innen mit frischem Abgas beaufschlagt werden, können als Heizrohre fungieren, an denn das vorbeiströmende Abgas erwärmt wird. Um diesen Effekt zu verstärken, können die Verteilerrohre 7 außen mit Heizrippen versehen sein. Das über den Abgasauslass 3, 3a abgeführte Abgas kann entweder zur Abgasrezirkulation benutzt und/ oder einem Auspuff zugeführt werden.

Großmotoren oben erwähnter Art finden vielfach als Schiffsantrieb Verwendung. Im Wasser liegende Schiffe können sich seitlich neigen, was auch zu einer Neigung der erfindungsgemäßen Vorrichtung und insbesondere der Wannen 12 führen kann, wie in Figur 5 angedeutet ist. Wenn jedem Abzweigstutzen 9, wie im dargestellten Beispiel, eine eigene Wanne 12 zugeordnet ist, ergeben sich viele, vergleichsweise kleine Wannen 12, so dass auch im Falle einer vergleichsweise großen Neigung das untere, offene Ende jedes Abzweigstutzens 9 in der Regel noch genügend tief unterhalb des Flüssigkeitsspiegels in der zugeordneten Wanne 12 ist, wie aus Figur 5 anschaulich ersichtlich ist. Sofern dies nicht mehr gewährleistet sein sollte bzw. bei zu großem Verlust an Reinigungsflüssigkeit, erfolgt eine Nachfüllung der Wannen 12, was mit Hilfe der den Wannen 12 zugeordneten Reinigungsflüssigkeits-Versorgungseinrichtung schnell und einfach möglich ist.

Zur Vereinfachung der Montage können die jeweils einer quer zur Behälterachse laufenden Reihe von Abzweigstutzen 9 zugeordneten, nebeneinander angeordneten Wannen, wie oben schon erwähnt, zu einer gemeinsamen Kassette 13 zusammengefasst sein, die durch Zwischenwände 32 in einzelne Wannen unterteilt ist, wie am besten aus Figur 2 erkennbar ist. Die in Richtung der Behälterachse hintereinander angeordneten Kassetten können zweckmäßig voneinander beabstandet sein. Es wäre jedoch auch denkbar, die in Richtung der Behälterachse jeweils hintereinander angeordneten Wannen zu gemeinsamen, über die Behälterlänge durchgehenden Kassetten zusammenzufassen, die seitlich voneinander beabstandet sind. Die Zwischenwände 32 sind in jedem Fall zweckmäßig im Bereich zwischen der Oberseite des Zwischenbodens 18 und ihrer oberen Kante mit Überströmöffnungen 33 versehen, über die ein Flüssigkeitsaustausch zwischen benachbarten Wannen stattfinden kann. Hierdurch ist sichergestellt, dass unabhängig vom Flüssigkeitsnachschub in allen nebeneinander angeordneten Wannen in etwa derselbe Flüssigkeitsstand erreicht wird. Die Position der Überströmöffnungen 33 ist so gewählt, dass auch im Falle der größten Neigung der als Stauelement fungierende Zwischenboden 18 ganzflächig mit Reinigungsflüssigkeit bedeckt ist und dementsprechend auch das offene untere Ende der Abzweigstutzen 9 ganzflächig überflutet ist, wie Figur 5 anschaulich zeigt.

Die Kassetten 13 sind, wie Figur 2 weiter zeigt, mit seitlichen Stützleisten 34 versehen, die auf behälterseitig vorgesehene Tragleisten 35 aufsetzbar sind. Zweckmäßig können dabei die Stützleisten 34 und/oder die Tragleisten 35 in der Höhe einstellbar angeordnet sein, so dass die Eintauchtiefe der Abzweigstutzen 9 ebenfalls einstellbar ist.

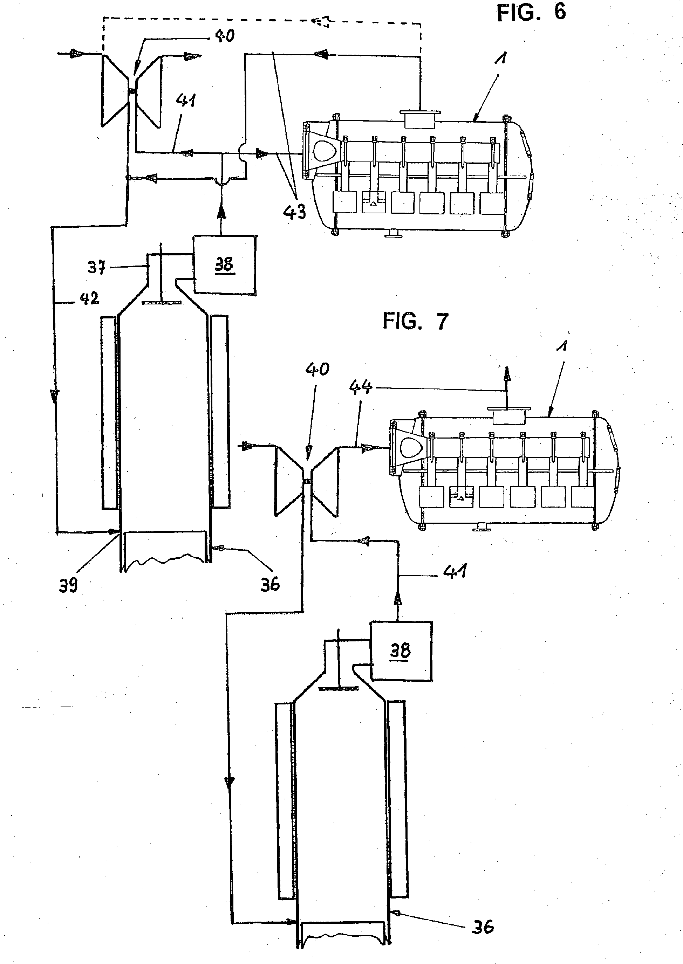

Die Figuren 6 und 7 zeigen Anwendungsbeispiele der oben beschriebenen mehrstufigen Abgas-Reinigungsvorrichtung. Eine bevorzugte Anwendung ist, wie schon erwähnt, die Reinigung von zur Abgasrezirkulation verwendetem Abgas, d.h. von zur Reduzierung des NOₓ und/oder SOₓ- Ausstoßes eines Motors, der diesem Motor zugeführten, frischen Ladeluft nochmals beigemischtem Abgas. Eine derartige Anwendung liegt der Figur 6 zugrunde.

Dabei ist ein in Form eines Zylinders angedeuteter Großmotor in Form eines Zweitakt-Großdieselmotors 36 dargestellt. Der vom Arbeitsraum des Zylinders abgehende, durch ein Auslassventil kontrollierbare Auslassstutzen 37 mündet in einen über alle Zylinder durchgehenden Abgassammler 38. Im unteren Bereich des Zylindermantels sind Einlassschlitze 39 vorgesehen, über die dem Arbeitsraum bei abgesenktem Kolben Ladeluft zugeführt wird. Dem Motor ist ein Abgasturbolader 40 zugeordnet, dessen Turbine mit Abgas betrieben wird und dessen Kompressor die vorverdichtete Ladeluft liefert. Dementsprechend ist die Turbine des Abgasturboladers 40 über eine Abgasleitung 41 mit dem Abgassammler 38 verbunden. Vom Ausgang des Kompressors führt eine Ladeluftleitung 42 zu den Einlassschlitzen 39. Der Ladeluft wird Abgas beigemischt. Hierzu zweigt von der Abgasleitung 41 eine Rezirkulationsleitung 43 ab, die in die Ladeluftleitung 42 oder, wie mit einer unterbrochenen Linie angedeutet ist, in den Ansaugstutzen des Kompressors des Abgasturboladers 40 einmündet. In die Rezirkulationsleitung 43 ist zur Reinigung des Abgases die durch den Druckbehälter 1 angedeutete Abgasreinigungseinrichtung integriert. Hierbei wird nur der Teil des Abgases gereinigt, der zur Rezirkulation Verwendung findet.

Es wäre aber auch denkbar, das gesamte Abgas vor dem Ausstoß in die Umgebung zu reinigen. Eine derartige Ausführung liegt der Figur 7 zugrunde. Hierbei ist die durch den Druckbehälter 1 angedeutete Abgasreinigungsvorrichtung in eine vom Ausgang der Turbine des Abgasturboladers 40 abgehende, in die Umgebung mündende Auspuffleitung 44 eingebaut. Im Übrigen entspricht der Motoraufbau der Anordnung gemäß Figur 6.

In den den Figuren 6 und 7 zugrundeliegenden Beispielen ist jeder Brennkraftmaschine jeweils eine einzelne, eigene erfindungsgemäße Vorrichtung zur Abgasreinigung zugeordnet. Es wäre aber auch denkbar, einer Anordnung von mehreren Brennkraftmaschinen eine gemeinsame Vorrichtung zur Abgasreinigung erfindungsgemäßer Art zuzuordnen. Ebenso wäre es denkbar einer Brennkraftmaschine mehrere erfindungsgemäße Vorrichtungen zur Abgasreinigung zuzuordnen. Eine weitere Möglichkeit besteht darin, das gereinigte Abgas abweichend von den Ausführungen gemäß Figuren 6 und 7 nur teilweise zur Abgasrezirkulation zu verwenden und den übrigen Teil als Auspuffgas auszublasen. Dies gilt sowohl für an Bord von Schiffen installierte oder stationäre Anordnungen.

Vorstehend sind zwar einige Ausführungs- und Anwendungsbeispiele näher erläutert, ohne dass jedoch hiermit eine Beschränkung verbunden sein soll. Vielmehr stehen dem Fachmann eine Reihe von Möglichkeiten zur Verfügung, um den allgemeinen Gedanken der Erfindung an die Verhältnisse des Einzelfalls anzupassen.

## Patentansprüche

1. Verfahren zur Reinigung von Motorabgas, insbesondere bei wenigstens einem Großmotor, vorzugsweise Zweitakt-Großdieselmotor, wobei zunächst eine Beaufschlagung des Abgases mit einer fein verteilten Reinigungsflüssigkeit stattfindet und dann ein aus Abgas und fein verteilter Reinigungsflüssigkeit gebildeter Volumenstrom durch ein in einem Behälter (1) vorgesehenes Bad aus Reinigungsflüssigkeit hindurch geschickt wird, das durch ein gas- und flüssigkeitsdurchlässiges Stauelement (18) unterteilt ist, wobei der durch Abgas und fein verteilte Reinigungsflüssigkeit gebildete Volumenstrom in den unterhalb des Stauelements (18) sich befindenden Bereich des Reinigungsflüssigkeitsbads eingeleitet wird und von hier aus den oberhalb des Stauelements (18) sich befindenden Bereich des Reinigungsflüssigkeitsbads durchsprudelt, **dadurch gekennzeichnet, dass** zumindest ein Teil der dem Abgas zuzuführenden, fein verteilten Reinigungsflüssigkeit einem noch nicht in Teilströme aufgesplitteten Abgas-Gesamtstrom zugeführt wird.

2. Verfahren nach Anspruch 1, **dadurch gekennzeichnet, dass** das Abgas vor der Einleitung in das Reinigungsflüssigkeitsbad in Teilströme aufgeteilt wird und dass ein Teil der dem Abgas zuzuführenden, fein verteilten Reinigungsflüssigkeit zumindest den Abgas-Teilströmen zugeführt wird.

3. Verfahren nach einem der vorhergehenden Ansprüche, **dadurch gekennzeichnet, dass** die Beaufschlagung des Abgases zumindest mit einem Teil der fein verteilten Reinigungsflüssigkeit durch Venturiwirkung erfolgt.

4. Verfahren nach einem der vorhergehenden Ansprüche, **dadurch gekennzeichnet, dass** jeder durch Abgas und fein verteilter Reinigungsflüssigkeit gebildete Volumenstrom bei der Einleitung in das Reinigungsflüssigkeitsbad bezüglich der Zuführrichtung radial umgelenkt wird.

5. Verfahren nach einem der vorhergehenden Ansprüche, **dadurch gekennzeichnet, dass** als Reinigungsflüssigkeit eine nichtschaumbildende Flüssigkeit, vorzugsweise Wasser mit oder ohne Chemikalien, Verwendung findet.

6. Verfahren nach einem der vorhergehenden Ansprüche, **dadurch gekennzeichnet, dass** oberhalb des Reinigungsflüssigkeitsbads, das den Reinigungsflüssigkeitsanteil des eingeleiteten Volumenstroms zumindest zum größten Teil absorbiert, eine zumindest einstufige Abscheidung von vom aus dem Reinigungsflüssigkeitsbad aufsteigenden Abgas mitgerissenen Flüssigkeitsteilchen erfolgt, wobei die oberhalb des Reinigungsflüssigkeitsbads stattfindende Abscheidung von Flüssigkeitsteilchen vorzugsweise zumindest teilweise unter Verwendung eines für das Abgas durchlässigen Separierelements (62) durchgeführt wird und/oder zumindest teilweise durch Fliehkraftwirkung erfolgt.

7. Verfahren nach Anspruch 6, **dadurch gekennzeichnet, dass** eine Abscheidung durch Fliehkraftwirkung nach einer Abscheidung mittels des Separierelements (62) erfolgt.

8. Verfahren nach einem der vorhergehenden Ansprüche, **dadurch gekennzeichnet, dass** das gereinigte Abgas zumindest teilweise für die Abgasrezirkulätion bei einem zugeordneten Motor Verwendung findet und/oder in die Umgebung abgegeben wird.

9. Vorrichtung zur Durchführung des Verfahrens nach wenigstens einem der vorhergehenden Ansprüche,
mit wenigstens einer vom Abgas passierbaren Zuführeinrichtung (51, 51a) zur Beaufschlagung des vorbeiströmenden Abgases mit fein verteilter Reinigungsflüssigkeit,
mit wenigstens einer in einem Behälter (1) angeordneten, nach oben offenen, ein Bad aus Reinigungsflüssigkeit enthaltenden Wanne (12),
mit wenigstens einem die Wanne (12) in ein unteres Abteil (19) mit Reinigungsflüssigkeit und ein oberes Abteil (20) mit Reinigungsflüssigkeit unterteilenden Zwischenboden, der als gas- und flüssigkeitsdurchlässiger Staukörper (18) ausgebildet ist und
mit wenigstens einem in eine Wanne (12) hineinragenden, mit Abgas beaufschlagbaren, den Staukörper (18) durchgreifenden Rohrstutzen (9), **dadurch gekennzeichnet, dass** zumindest eine mit Reinigungsflüssigkeit beaufschlagbare Zuführeinrichtung (51) zur Beaufschlagung des vorbeiströmenden Abgases mit fein verteilter Reinigungsflüssigkeit einer vom noch nicht in Teilströme aufgesplitteten Abgasgesamtstrom durchströmbaren Zuführleitung (50) zugeordnet ist.

10. Vorrichtung nach Anspruch 9, **dadurch gekennzeichnet, dass** jedem in eine Wanne (12) eintauchenden, mit einem Abgasteilstrom beaufschlagbaren Rohrstutzen (9) zumindest eine mit Reinigungsflüssigkeit beaufschlagbare Zuführeinrichtung (51a) zur Beaufschlagung des vorbeiströmenden Abgases mit fein verteilter Reinigungsflüssigkeit zugeordnet ist.

11. Vorrichtung nach Anspruch 9 oder 10, **dadurch gekennzeichnet, dass** zumindest eine Zuführeinrichtung (51, 51a) zur Beaufschlagung des Abgases mit fein verteilter Reinigungsflüssigkeit als Venturi-Anordnung ausgebildet ist, die eine die Gasströmung beschleunigende Strömungsdrossel (54, 54a) und wenigstens eine dieser zugeordnete, mit Reinigungsflüssigkeit beaufschlagbare Versorgungseinrichtung aufweist, die vorzugsweise einer in den zugeordneten Strömungskanal hineinragenden Lanze (11) und/oder einem an der Lanze (11) angebrachten Umströmungskörper (58) zugeordnet ist.

12. Vorrichtung nach Anspruch 11, **dadurch gekennzeichnet, dass** zur Bildung einer Strömungsdrossel (54) eine umfangsseitige Einziehung (56) des zugeordneten Strömungskanals vorgesehen und/oder im zugeordneten Strömungskanal zumindest ein vom Abgas umströmter, vorzugsweise an einer in den zugeordneten Strömungskanal hineinragenden, koaxialen Lanze (11) angebrachter Umströmungskörper (58) angeordnet ist, der vorzugsweise an seiner Oberfläche mit einer Schutzschicht versehen ist.

13. Vorrichtung nach einem der vorhergehenden Ansprüche 9 bis 12, **dadurch gekennzeichnet, dass** dem unteren Ende jedes in eine Wanne (12) eintauchenden Rohrstutzens (9) ein eine radiale Strömungsumlenkung bewirkender Ventilkörper (14) zugeordnet ist, der vorzugsweise gegenüber dem unteren Ende des zugeordneten Rohrstutzens (9) einstellbar ist.

14. Vorrichtung nach Anspruch 13, **dadurch gekennzeichnet, dass** der Ventilkörper (14) an seiner dem zugeordneten Rohrstutzen (9) zugewandten Oberseite mit radial verlaufenden Schaufeln (60) versehen ist, die vorzugsweise über ihrer Länge gebogen sind und deren Höhe von radial innen nach radial außen zunimmt.

15. Vorrichtung nach Anspruch 14, **dadurch gekennzeichnet, dass** der Ventilkörper (14) einen konoiden Kern (14a) aufweist, der an seiner Oberseite die Schaufeln (60) trägt.

16. Vorrichtung nach einem der vorhergehenden Ansprüche 9 bis 15, **dadurch gekennzeichnet, dass** oberhalb jeder Wanne (12) eine Abscheideeinrichtung zum Abscheiden von vom aus dem Reinigungsbad aufsteigenden Abgas mitgeführten Teilchen vorgesehen ist, die zumindest ein oberhalb einer zugeordneten Wanne (12) angeordnetes Separierelement (62) aus einem für Abgas durchlässigen, vorzugsweise aus einem porösen und/oder vernetzten Material aufweist.

17. Vorrichtung nach einem der vorhergehenden Ansprüche 9 bis 16, **dadurch gekennzeichnet, dass** eine oberhalb jeder Wanne vorgesehene Abscheideeinrichtung wenigstens ein vorzugsweise einem für Abgas durchlässigen Separierelement (62) nachgeordnetes Ableitschild (29) aufweist, dessen Seitenkanten mit den benachbarten Behälterwänden Strömungspassagen (30) bilden, wobei das Ableitschild (29) vorzugsweise auf mittlerer Behälterhöhe angeordnet ist und an den seitlichen Behälterwänden oberhalb der Strömungspassagen (30) nach Innen gerichtete Tropfenfangleisten (31) angebracht sind.

18. Vorrichtung nach einem der vorhergehenden Ansprüche 9 bis 17, **dadurch gekennzeichnet, dass** mehrere mit einem Abgasteilstrom beaufschlagbare Rohrstutzen (9) vorgesehen sind, die in eine Wanne (12) eintauchen, wobei vorzugsweise mehrere Wannen (12) vorgesehen sind, in die jeweils ein zugeordneter Rohrstutzen (9) oder eine zugeordnete Gruppe von Rohrstutzen (9) eintaucht und dass vorzugsweise zumindest einem Teil der Wannen (12), vorzugsweise jeder Wanne (12) eine Versorgungseinrichtung zur Zufuhr von Reinigungsflüssigkeit zugeordnet ist.

19. Vorrichtung nach einem der vorhergehenden Ansprüche 9 bis 18, **dadurch gekennzeichnet, dass** durch Zwischenwände in einzelne Wannen (12) unterteilte in Längsrichtung und/ oder Querrichtung des Behälters (1) verlaufende Wannenkassetten (13) vorgesehen sind, wobei vorzugsweise der Behälter (1) innen mit seitlichen Tragleisten (35) versehen ist, auf denen die Wannenkassetten (13) abstützbar sind, die mit seitlichen Stützleisten (34) versehen sind, deren Höhenabstand zu den Tragleisten (35) ein- und feststellbar ist und dass die Zwischenwände im Bereich des oberen Abteils (20) Überströmöffnungen (33) aufweisen.

20. Vorrichtung nach der vorhergehenden Ansprüche 9 bis 19, **gekennzeichnet durch** eine Anordnung mit wenigstens einem mit der Zuführleitung (50) kommunizierenden Verteilerrohr (7), von dem mehrere **durch** jeweils einen Rohrstutzen (9) gebildete Abzweigstutzen nach unten abgehen, die in eine Wanne (12) hineinragen, wobei vorzugsweise mehrere, parallel nebeneinander angeordnete Verteilerrohre (7) vorgesehen sind, von denen in Querrichtung reihenförmig nebeneinander angeordnete, **durch** jeweils einen Rohrstutzen (9) gebildete Abzweigstutzen nach unten abgehen.

21. Vorrichtung nach einem der vorhergehenden Ansprüche 11 bis 20, **dadurch gekennzeichnet, dass** das Verteilerrohr (7) bzw. die Verteilerrohre (7) in einem Behälter (1), vorzugsweise im oberen Bereich des Behälters (1) unterhalb eines nach oben abgehenden Abgasausgangs (3), angeordnet ist bzw. sind und dass der Behälter (1) vorzugsweise als Druckbehälter ausgebildet ist.

22. Vorrichtung nach einem der vorhergehenden Ansprüche 9 bis 21, **dadurch gekennzeichnet, dass** das Stauelement (18) als ein- oder mehrlagiges Netz- und/ oder Gitterwerk oder als Metallschaum- oder Kunststoffschaumkörper ausgebildet ist.

23. Vorrichtung nach einem der vorhergehenden Ansprüche 9 bis 22, **dadurch gekennzeichnet, dass** das Stauelement (18) randseitig auf Tragleisten (21) der zugeordneten Wanne (12) abgestützt und mittels wenigstens einer am zugeordneten Rohrstutzen (9) festlegbaren Büchse (23) von oben gehalten ist.

24. Vorrichtung nach wenigstens einem der vorhergehenden Ansprüche 9 bis 23, **dadurch gekennzeichnet, dass** die Wannen (12) obere Überlaufkanten (28) und/oder einen bodenseitig vorgesehenen Flüssigkeitsauslass (27) aufweisen und dass der Behälter (1) mit einem vorzugsweise nach unten abgehenden Flüssigkeitsausgang (4) versehen ist.

25. Vorrichtung nach wenigstens einem der vorhergehenden Ansprüche 9 bis 24, **dadurch gekennzeichnet, dass** der Behälter (1) in eine Abgasrezirkulationsleitung (43) wenigstens eines mit einer Abgasrezirkuliereinrichtung versehenen Großmotors, insbesondere Zweitakt-Großdieselmotors, eingebaut ist.

26. Vorrichtung nach wenigstens einem der vorhergehenden Ansprüche 9 bis 25, **dadurch gekennzeichnet, dass** das gereinigte Abgas auf wenigstens eine Abgasrezirkulationsleitung (43) und/oder wenigstens eine in die Umgebung mündende Auspuffleitung (44) aufgeteilt wird.

## Claims

1. A method for engine exhaust gas scrubbing, in particular for at least one large engine, preferably a two stroke large Diesel engine, with an admission of dispersed scrubbing liquid into the exhaust gas taking place at first and subsequently a volume flow formed of exhaust gas and dispersed scrubbing liquid being sent through a scrubbing liquid bath contained in a receptacle (1) which is divided by a gas and liquid permeable retaining element (18), with the volume flow formed by the exhaust gas and dispersed scrubbing liquid being introduced into the area of the scrubbing liquid bath located below the retaining element (18) and bubbling through the area of the scrubbing liquid bath located above the retaining element (18) from here, **characterized in that** at least a part of the dispersed scrubbing liquid to be supplied to the exhaust gas is supplied to an overall exhaust gas flow not yet divided into partial flows.

2. A method according to claim 1, **characterized in that** the exhaust gas prior to introduction into the scrubbing liquid bath is divided into partial flows, and that part of the dispersed scrubbing liquid to be supplied to the exhaust gas is at least supplied to the exhaust gas partial flows.

3. A method according to any one of the preceding claims, **characterized in that** admission to the exhaust gas occurs at least with part of the dispersed scrubbing liquid by Venturi effect.

4. A method according to any one of the preceding claims, **characterized in that** each volume flow formed by exhaust gas and dispersed scrubbing liquid when being introduced into the scrubbing liquid bath is radially deflected with respect to the feeding direction.

5. A method according to any one of the preceding claims, **characterized in that** as a scrubbing liquid a non-foaming liquid, preferably water with or without chemicals is used.

6. A method according to any one of the preceding claims, **characterized in that** above the scrubbing liquid bath, which absorbs the scrubbing liquid portion of the introduced volume flow at least to a large extent, an at least single-stage separation of liquid particles entrained by the exhaust gas rising from the scrubbing liquid bath occurs, whereby the separation of liquid particles taking place above the scrubbing liquid bath is carried out preferably at least partially by using a separating element (62) permeable for the exhaust gas and/or at least partially by the effect of centrifugal force.

7. A method according to claim 6, **characterized in that** a separation by centrifugal force effect takes place after the separation by means of a separating element (62).

8. A method according to any one of the preceding claims, **characterized in that** the scrubbed exhaust gas at least partially is used for exhaust gas recirculation in an associated engine and/or is discharged into the environment.

9. A device for performance of the method according to at least any one of the preceding claims,
comprising at least a feeding device (51, 51a) for charging the exhaust gas flowing past with dispersed scrubbing liquid,
comprising at least a sump (12) open towards the top, located in a receptacle (1) and containing a scrubbing liquid bath,
comprising at least an intermediate bottom formed as a gas and liquid permeable retaining element (18) which divides the sump (12) into a lower compartment (19) with scrubbing liquid and an upper compartment (20) with scrubbing liquid, and
comprising at least a branch socket (9) chargeable with exhaust gas,
extending into a sump (12) and penetrating the retaining element (18), **characterized in that** at least a feeding device (51) chargeable with scrubbing liquid for charging the exhaust gas flowing past with dispersed scrubbing liquid is associated with a supply line (50) through which an overall exhaust gas flow not yet divided into partial flows can pass.

10. A device according to claim 9, **characterized in that** each branch socket (9) immersing into a sump (12) and chargeable with a partial exhaust gas flow is associated at least with a feeding device (51a) chargeable with scrubbing liquid for charging the exhaust gas flowing past with dispersed scrubbing liquid.

11. A device according to claim 9 or 10 **characterized in that** at least one feeding device (51, 51a) for charging the exhaust gas with dispersed scrubbing liquid is formed as a Venturi assembly which comprises a flow throttle (54, 54a) accelerating the gas flow and comprises at least a supply device chargeable with scrubbing liquid associated with it, which supply device is preferably associated with an injector (11) extending into the associated flow channel and/or with a flow body (58) mounted on the injector (11).

12. A device according to claim 11, **characterized in that** for formation of a flow throttle (54) a neck-in on the circumference (56) of the associated flow channel is provided and/or at least a flow body (58) circulated by the exhaust gas is located in the associated flow channel, which flow body is preferably mounted on a coaxial injector (11) extending into the associated flow channel and is preferably provided with a protective layer on its surface.

13. A device according any one of the preceding claims 9 to 12 **characterized in that** a valve body (14) causing a radial flow deflection is associated with the bottom end of each branch socket (9) immersing into a sump (12) whereby the valve body (14) preferably can be adjusted relative to the bottom end of the associated branch socket (9).

14. A device according to claim 13, **characterized in that** the valve body (14) on its upper side facing towards the associated branch socket (9) is provided with radially extending blades (60) preferably bent across their length and their height increases from radially inside to radially outside.

15. A device according to claim 14 **characterized in that** the valve body (14) comprises a conoid core (14a) which bears the blades (60) on its upper side.

16. A device according to any one of the preceding claims 9 to 15, **characterized in that** above each sump (12) a separating device for separating fluid particles entrained by the exhaust gas rising from the scrubbing bath is provided which comprises at least a separating element (62) located above an associated sump, which separating element (62) is composed of a material permeable for exhaust gas preferably of a porous and/or crosslinked material.

17. A device according to any one of the preceding claims 9 to 16, **characterized in that** a separating device provided above each sump comprises at least a deflector shield (29) preferably downstream of a separating element (62) permeable for exhaust gas, the lateral edges of which form flow passages (30) with the adjacent receptacle walls, whereby the deflector shield (29) is located preferably on an average receptable height and whereby on the lateral receptable walls above the flow passages (30), drop catch strips (31) extending inwardly are located.

18. A device according to any one of the preceding claims 9 to 17, **characterized in that** several branch sockets (9) chargeable with a partial exhaust gas flow are provided which immerse into a sump (12) whereby preferably several sumps (12) are provided into which each an associated branch socket (9) or an associated group of branch sockets (9) is immersed and whereby preferably a supply device for the supply of scrubbing liquid is associated at least with part of the sumps (12), preferably with each sump (12).

19. A device according to any one of the preceding claims 9 to 18, **characterized in that** sump cassettes (13) extending in longitudinal direction and/or transverse direction of the receptacle (1) and divided into individual sumps (12) by intermediate walls are provided whereby preferably the receptacle (1) is provided inside with holding strips (35) upon which the sump cassettes (13) can be supported, which are provided with lateral support strips (34), and that the height distance between the support strips (34) that the holding strips (35) can be adjusted and fixed and that the intermediate walls in the area of the upper compartment (20) comprise overflow orifices (33).

20. A device according to any one of the preceding claims 9 to 19, **characterized by** an assembly with at least one distribution pipe (7) communicating with the supply line (50) from which several branch pipes formed by a branch socket (9) branch off towards the bottom and extend into a sump (12), whereby preferably several distribution pipes (7) located in parallel side by side are provided, from which branch pipes formed by a branch socket (9) each and located side by side in a row in transverse direction extend towards the bottom.

21. A device according to any one of the preceding claims 11 to 20, **characterized in that** the distribution pipe (7) and/or the distribution pipes (7) is and/or are located in a receptable (1) preferably in the upper region of the receptacle (1) below the exhaust gas outlet (3) extending towards the top and that the receptable (1) preferably is defined as a pressure vessel.

22. A device according to any one of the preceding claims 9 to 21, **characterized in that** the retaining element (18) is formed as a single or multiple layer network and/or grid or as a metal foam or plastic foam body.

23. A device according to any one of the preceding claims 9 to 22, **characterized in that** the retaining element (18) borders are supported on supporting strips (21) of the associated sump (12) and is held from the top by means of at least one bushing (23) fixable on the associated branch socket (9).

24. A device according to at least one of the preceding claims 9 to 23, **characterized in that** the sumps (12) comprise upper overflow edges (28) and/or a drain hole (27) provided on the bottom, and that the receptacle (1) is provided with a liquid outlet (4) preferably discharging towards the bottom.

25. A device according to at least one of the preceding claims 9 to 24, **characterized in that** the receptacle (1) is integrated into an exhaust gas recirculation line (43) of at least one large engine provided with an exhaust gas recirculation device, in particular a two stroke large diesel engine.

26. A device according to at least one of the preceding claims 9 to 25, **characterized in that** the scrubbed exhaust gas is distributed to at least one exhaust gas recirculation line (43) and /or at least to one exhaust pipe (44) led to the surroundings.

## Revendications

1. Procédé d'épuration de gaz d'échappement de moteur, en particulier dans au moins un grand moteur, de préférence grand moteur diesel à deux temps, dans lequel, d'abord, le gaz d'échappement est exposé à un liquide d'épuration finement dispersé et, ensuite, on fait passer un flux volumique formé de gaz d'échappement et de liquide d'épuration finement dispersé à travers un bain de liquide d'épuration prévu dans un réservoir (1), qui est divisé par un élément de retenue (18) perméable au gaz et au liquide, le flux volumique formé de gaz d'échappement et de liquide d'épuration finement dispersé étant introduit dans la zone du bain de liquide d'épuration située au-dessous dudit élément de retenue (18) et traversant en bouillonnant, à partir d'ici, la zone du bain de liquide d'épuration située au-dessus de l'élément de retenue (18), **caractérisé par le fait qu'**au moins une partie du liquide d'épuration finement dispersé qui est à amener au gaz d'échappement est amenée à un courant total de gaz d'échappement qui n'est pas encore divisé en courants partiels.

2. Procédé selon la revendication 1, **caractérisé par le fait que**, avant l'introduction dans le bain de liquide d'épuration, le gaz d'échappement est divisé en courants partiels, et qu'une partie du liquide d'épuration finement dispersé qui est à amener au gaz d'échappement est amenée au moins aux courants partiels de gaz d'échappement.

3. Procédé selon l'une quelconque des revendications précédentes, **caractérisé par le fait que** l'exposition du gaz d'échappement, au moins à une partie du liquide d'épuration finement dispersé, se fait par effet Venturi.

4. Procédé selon l'une quelconque des revendications précédentes, **caractérisé par le fait que** chaque flux volumique formé de gaz d'échappement et de liquide d'épuration finement dispersé est, lors de l'introduction dans le bain de liquide d'épuration, dévie radialement par rapport à la direction d'alimentation.

5. Procédé selon l'une quelconque des revendications précédentes, **caractérisé par le fait que** l'on utilise en tant que liquide d'épuration un liquide non moussant, de préférence de l'eau avec ou sans substances chimiques.

6. Procédé selon l'une quelconque des revendications précédentes, **caractérisé par le fait qu'**au-dessus du bain de liquide d'épuration qui absorbe, au moins pour la plus grande partie, la proportion de liquide d'épuration du flux volumique introduit, a lieu une séparation au moins à un étage de particules de liquide entraînées par le gaz d'échappement s'envolant du bain de liquide d'épuration, la séparation de particules de liquide qui a lieu au-dessus du bain de liquide d'épuration est effectuée, de préférence au moins en partie, en utilisant un élément séparateur (62) perméable au gaz d'échappement et/ou au moins en partie par effet de force centrifuge.

7. Procédé selon la revendication 6, **caractérisé par le fait qu'**une séparation par effet de force centrifuge se fait après une séparation au moyen dudit élément séparateur (62).

8. Procédé selon l'une quelconque des revendications précédentes, **caractérisé par le fait que** le gaz d'échappement épuré est utilisé, au moins en partie, pour la recirculation de gaz d'échappement dans un moteur associé et/ou est dégagé dans l'environnement.

9. Dispositif de mise en oeuvre du procédé selon l'une au moins des revendications précédentes, comprenant
au moins un dispositif d'amenée (51, 51 a) que le gaz d'échappement peut passer et qui est destiné à alimenter le gaz d'échappement passant en liquide d'épuration finement dispersé,
au moins une cuve (12) disposée dans un réservoir (1), ouverte vers le haut et contenant un bain de liquide d'épuration,
au moins un fond intermédiaire qui divise la cuve (12) en un compartiment inférieur (19) à liquide d'épuration et en un compartiment supérieur (20) à liquide d'épuration et qui est réalisé en tant que corps de retenue (18) perméable au gaz et au liquide, et
au moins une tubulure (9) qui se projette dans une cuve (12), est apte à être alimentée en gaz d'échappement et traverse ledit corps de retenue (18),
**caractérisé par le fait qu'**au moins un dispositif d'amenée (51) apte à être alimenté en liquide d'épuration et destiné à alimenter le gaz d'échappement passant en liquide d'épuration finement dispersé est associé à une conduite d'amenée (50) apte à être traversée par le courant total de gaz d'échappement qui n'est pas encore divisé en courants partiels.

10. Dispositif selon la revendication 9, **caractérisé par le fait qu'**à chaque tubulure (9) se projetant dans une cuve (12) et apte à être alimentée en un courant partiel de gaz d'échappement est associé au moins un dispositif d'amenée (51 a) apte à être alimenté en liquide d'épuration et destiné à alimenter le gaz d'échappement passant en liquide d'épuration finement dispersé.

11. Dispositif selon la revendication 9 ou 10, **caractérisé par le fait qu'**au moins un dispositif d'amenée (51, 51a) destiné à alimenter le gaz d'échappement en liquide d'épuration finement dispersé est réalisé comme ensemble Venturi qui présente un étrangleur d'écoulement (54, 54a) accélérant le courant de gaz et au moins un dispositif d'alimentation qui est associé à celui-ci et apte à être alimenté en liquide d'épuration et qui, de préférence, est associé à une lance (11) se projetant dans le canal d'écoulement associé et/ou à un corps d'écoulement de contournement (58) monté sur ladite lance (11).

12. Dispositif selon la revendication 11, **caractérisé par le fait que**, pour former un étrangleur d'écoulement (54), on prévoit un rétrécissement périphérique (56) du canal d'écoulement associé et/ou on dispose, dans le canal d'écoulement associé, au moins un corps d'écoulement de contournement (58) autour duquel s'écoule le gaz d'échappement et qui est monté de préférence sur une lance (11) coaxiale se projetant dans la canal d'écoulement associé et qui, de préférence, est pourvu d'une couche protectrice sur sa surface.

13. Dispositif selon l'une quelconque des revendications précédentes 9 à 12, **caractérisé par le fait qu'**à l'extrémité inférieure de chaque tubulure (9) qui plonge dans une cuve (12) est associé un corps de valve (14) qui provoque une déviation radiale d'écoulement et qui, de préférence, est réglable par rapport à l'extrémité inférieure de la tubulure (9) associée.

14. Dispositif selon la revendication 13, **caractérisé par le fait que** ledit corps de valve (14) est pourvu, sur sa face supérieure montrant vers la tubulure (9) associée, d'aubes (60) s'étendant radialement qui, de préférence, sont pliées sur leur longueur et dont la hauteur augmente radialement de l'intérieur vers l'extérieur.

15. Dispositif selon la revendication 14, **caractérisé par le fait que** ledit corps de valve (14) présente un coeur (14a) conoïde qui porte les aubes (60) sur sa face supérieure.

16. Dispositif selon l'une quelconque des revendications précédentes 9 à 15, **caractérisé par le fait qu'**au-dessus de chaque cuve (12) est prévu un dispositif de séparation qui est destiné à séparer des particules entraînées par le gaz d'échappement s'envolant du bain d'épuration et qui présente au moins un élément séparateur (62) disposé au-dessus d'une cuve (12) associée, en une matière perméable au gaz d'échappement, de préférence en une matière poreuse et/ou réticulée.

17. Dispositif selon l'une quelconque des revendications précédentes 9 à 16, **caractérisé par le fait qu'**un dispositif de séparation prévu au-dessus de chaque cuve présente au moins un déflecteur (29) qui, de préférence, est monté en aval d'un élément séparateur (62) perméable au gaz d'échappement et dont les bords latéraux forment, avec les parois de réservoir voisines, des passages d'écoulement (30), ledit déflecteur (29) étant disposé de préférence à mi-hauteur du réservoir, et des baguettes pare-gouttes (31) dirigées vers l'intérieur étant montées sur les parois latérales de réservoir, au-dessus desdits passages d'écoulement (30).

18. Dispositif selon l'une quelconque des revendications précédentes 9 à 17, **caractérisé par le fait que** plusieurs tubulures (9) aptes à être alimentées en un courant partiel de gaz d'échappement sont prévues, qui plongent dans une cuve (12), de préférence plusieurs cuves (12) étant prévues dans chacune d'elles plonge une tubulure (9) associée ou un groupe associé de tubulures (9), et que, de préférence à au moins une partie des cuves (12), de préférence à chaque cuve (12), est associé un dispositif d'alimentation destiné à amener du liquide d'épuration.

19. Dispositif selon l'une quelconque des revendications précédentes 9 à 18, **caractérisé par le fait que** des cassettes de cuve (13) sont prévues qui sont divisées par des cloisons en cuves (12) individuelles et s'étendent dans la direction longitudinale et/ou la direction transversale du réservoir (1), de préférence le réservoir (1) étant pourvu à l'intérieur de baguettes de support (35) latérales sur lesquelles les cassettes de cuve (13) sont aptes à être appuyées, qui sont pourvues de baguettes d'appui (34) latérales dont la distance en hauteur par rapport aux baguettes de support (35) peut être réglée et fixée, et que les cloisons présentent des ouvertures de décharge (33) au niveau du compartiment supérieur (20).

20. Dispositif selon l'une quelconque des revendications précédentes 9 à 19, **caractérisé par** un ensemble ayant au moins un tube distributeur (7) qui communique avec ladite conduite d'amenée (50) et d'où s'étend vers le bas une pluralité de tubulures de dérivation formées chacune par une tubulure (9) et se projetant dans une cuve (12), de préférence une pluralité de tubes distributeurs (7) disposés parallèlement les uns à côté des autres étant prévue, d'où s'étendent vers le bas des tubulures de dérivation disposées en rangée les unes à côté des autres dans la direction transversale et formées chacune par une tubulure (9).

21. Dispositif selon l'une quelconque des revendications précédentes 11 à 20, **caractérisé par le fait que** le tube distributeur (7) ou bien les tubes distributeurs (7) est ou bien sont disposé(s) dans un réservoir (1), de préférence dans la zone supérieure du réservoir (1), au-dessous d'une sortie de gaz d'échappement (3) partant vers le haut, et que ledit réservoir (1) est réalisé de préférence en tant que réservoir sous pression.

22. Dispositif selon l'une quelconque des revendications précédentes 9 à 21, **caractérisé par le fait que** ledit élément de retenue (18) est réalisé comme treillis et/ou grillage à une ou plusieurs couche(s) ou en tant que corps en mousse métallique ou en mousse plastique.

23. Dispositif selon l'une quelconque des revendications précédentes 9 à 22, **caractérisé par le fait que** ledit élément de retenue (18) est appuyé côté bord sur des baguettes de support (21) de la cuve (12) associée et est maintenu d'en haut au moyen d'au moins une douille (23) apte à être fixée sur la tubulure (9) associée.

24. Dispositif selon l'une au moins des revendications précédentes 9 à 23, **caractérisé par le fait que** les cuves (12) présentent des bords de trop-plein supérieurs (28) et/ou une sortie de liquide (27) prévue au niveau du fond, et que le réservoir (1) est pourvu d'une sortie de liquide (4) partant de préférence vers le bas.

25. Dispositif selon l'une au moins des revendications précédentes 9 à 24, **caractérisé par le fait que** ledit réservoir (1) est intégré dans une conduite de recirculation de gaz d'échappement (43) d'au moins un grand moteur, en particulier grand moteur diesel à deux temps, pourvu d'un dispositif de recirculation de gaz d'échappement.

26. Dispositif selon l'une au moins des revendications précédentes 9 à 25, **caractérisé par le fait que** le gaz d'échappement épuré est réparti entre au moins une conduite de recirculation de gaz d'échappement (43) et/ou au moins un tuyau d'échappement (44) débouchant dans l'environnement.
